# EUROPEAN PATENT APPLICATION

(11) **EP 4 683 146 A1**
(43) Date of publication of application: **21.01.2026**
(21) Application number: 24929124.6
(22) Date of filing: 13.08.2024
(51) Int. Cl.: H02G 15/02, G02B 6/44

(54) **FIXATION CLAMP FOR ARMORED STEEL WIRE OF SUBMARINE CABLE, AND UNDERWATER JUNCTION BOX**

(30) Priority: 11.03.2024 CN 202420463635 U
(71) Applicant: Zhongtian Technology Marine Systems Co., Ltd., Nantong, Jiangsu 226010 (CN); Jiangsu Zhongtian Technology Co., Ltd., Nantong, Jiangsu 226000 (CN)
(72) Inventor: LU, Qi, Nantong, Jiangsu 226010 (CN); ZHANG, Suhao, Nantong, Jiangsu 226010 (CN); FENG, Yawen, Nantong, Jiangsu 226010 (CN); GE, Zhixiao, Nantong, Jiangsu 226010 (CN); DONG, Wulei, Nantong, Jiangsu 226010 (CN)
(74) Representative: J A Kemp LLP
(86) International application number: PCT/CN2024/111896
(87) International publication number: WO 2025/189672

(57) **Abstract**

The present application relates to the technical field of submarine cable maintenance and provides a fixing clamp for an armoring steel wire of a submarine cable and an underwater joint box. The fixing clamp for an armoring steel wire of a submarine cable includes a first fixing member, a second fixing member and a first connecting member; the first fixing member and the second fixing member are configured to clamp the armoring steel wire therebetween; the first connecting member is configured to fix the first fixing member and the second fixing member, thereby clamping the armoring steel wire tightly. The foregoing fixing clamp for an armoring steel wire of a submarine cable may clamp an armoring steel wire between the first fixing member and the second fixing member by providing the first fixing member, the second fixing member and the first connecting member. This ensures that the tensile resistance performance of the armoring steel wire is not affected, thereby meeting the usage requirements of the armoring steel wire in the underwater working environment.

## Description

The present application claims priority to Chinese Patent Application No. 202420463635.4 filed with China National Intellectual Property Administration on March 11, 2024 and entitled "Fixing Clamp for Armoring Steel Wire for Submarine Cable and Underwater Joint Box", which is hereby incorporated by reference in its entirety.

### TECHNICAL FIELD

The present application relates to the technical field of submarine cable maintenance, and in particular to a fixing clamp for an armoring steel wire of a submarine cable and an underwater joint box.

### BACKGROUND

Submarine cable power transmission has the advantages of long-distance and large-capacity power transmission across seas, and is an effective way to realize power supply to China's islands or offshore platforms, integrate offshore wind power into the grid, and achieve international interconnection of power grids. In recent years, the construction of China's integrated energy internet and new power systems is accelerating, and the importance of submarine cable lines is increasing day by day. The number of alternating current submarine cable projects is gradually increasing, and the requirements for the reliability of submarine cable lines are also increasingly becoming strict. Therefore, researching the operation, maintenance and emergency repair technologies of alternating current submarine cables is of great significance to China's power grid construction.

The emergency repair of optical-electrical composite submarine cables mainly relies on hard joints, where a mechanical shell is used to restore an outer protective layer of the submarine cable. The tensile resistance performance of the armoring steel wire is an extremely important indicator, which is related to whether the submarine cable can operate stably underwater. Based on this, how to ensure that the tensile resistance performance of the armoring steel wire is not affected has become a crucial issue.

### SUMMARY

The present application provides a fixing clamp for an armoring steel wire of a submarine cable and an underwater joint box. By providing a first fixing member, a second fixing member and a first connecting member, the armoring steel wire may be clamped between the first fixing member and the second fixing member, ensuring that the tensile resistance performance of the armoring steel wire is not affected.

In one aspect, the present application provides a fixing clamp for an armoring steel wire of a submarine cable, which fixing clamp includes: a first fixing member, a second fixing member and a first connecting member; the first fixing member and the second fixing member are configured to clamp the armoring steel wire therebetween; the first connecting member is configured to fix the first fixing member and the second fixing member, so as to clamp the armoring steel wire tightly.

By providing the first fixing member, the second fixing member and the first connecting member, the armoring steel wire may be clamped between the first fixing member and the second fixing member, ensuring that the tensile resistance performance of the armoring steel wire is not affected, thereby meeting the usage requirements of the armoring steel wire in underwater working environments.

In one embodiment, the second fixing member is sleeved on an outside of the first fixing member, and the first connecting member is sleeved on an outside of the second fixing member.

Further, the armoring steel wire is located between circumferential surfaces of the first fixing member and the second fixing member, and openings of annular members are connected by a bolt, so as to fix the armoring steel wire between the first fixing member and the second fixing member.

In one embodiment, the second fixing member is sleeved on an outside of the first fixing member, and the first connecting member is connected with the first fixing member and the second fixing member.

In this way, the armoring steel wire is fixed between the first fixing member and the second fixing member.

In one embodiment, the first fixing member is arranged opposite to the second fixing member, and the first connecting member is connected with the first fixing member and the second fixing member.

In this way, the armoring steel wire is fixed between the first fixing member and the second fixing member.

In one embodiment, the first fixing member includes a first fixing part and a second fixing part, and the second fixing part is arranged perpendicular to and connected to the first fixing part; the second fixing member includes a third fixing part and a fourth fixing part, and the fourth fixing part is arranged perpendicular to and connected to the third fixing part; the third fixing part is sleeved on an outside of the first fixing part, the fourth fixing part is arranged parallel to the second fixing part, and the first connecting member is connected with the second fixing part and the fourth fixing part; a surface of the first fixing part fitting with the armoring steel wire is provided with a first inclined surface, a surface of the third fixing part fitting with the armoring steel wire is provided with a second inclined surface, and a slope of the first inclined surface matches a slope of the second inclined surface, to clamp the armoring steel wire between the first inclined surface and the second inclined surface.

For an armoring steel wire structure where the armoring steel wire forms an angle with a center of a submarine cable, the first fixing part of the fixing clamp is provided with the first inclined surface, the third fixing part is provided with the second inclined surface, the armoring steel wire is located between the first inclined surface and the second inclined surface, and the first connecting member is configured to connect the second fixing part with the fourth fixing part. When the first connecting member is tightened, the third fixing part may be driven to slide along the first fixing part, thereby enhancing a clamping force of the fixing clamp on the armoring steel wire.

In one embodiment, the second fixing part is provided with a through hole, and the armoring steel wire passes through the through hole.

After an end part of the armoring steel wire passes through the through hole, a locking degree of the first connecting member is adjusted, to enable the third fixing part to slide along the first fixing part so as to lock the armoring steel wire tightly.

In one embodiment, a second connecting member is further included; the first fixing member includes a first fixing part and a second fixing part, and the second fixing part is arranged perpendicular to and connected to the first fixing part; the second fixing member includes a third fixing part and a fourth fixing part, and the fourth fixing part is arranged perpendicular to and connected to the third fixing part; the third fixing part is sleeved on an outside of the first fixing part, the fourth fixing part is arranged parallel to the second fixing part, and the armoring steel wire is clamped between the first fixing part and the third fixing part, and between the second fixing part and the fourth fixing part; the first connecting member is connected with the second fixing part and the fourth fixing part, and the second connecting member is sleeved on an outside of the third fixing part.

In this way, the third fixing part and the first fixing part are clamped tightly together, thereby clamping the armoring steel wire located between the first fixing part and the third fixing part tightly.

In one embodiment, the first fixing member is a first annular member, the second fixing member is a second annular member, and the first annular member is opposite to the second annular member to clamp the armoring steel wire between them.

A working pressure is provided by the first connecting member to enable the first fixing member and the second fixing member to compress the armoring steel wire, generating a friction force, and the friction force is used to counteract a pulling force in the submarine cable, thereby realizing the fixing of the submarine cable.

In one embodiment, a third connecting member is further included; the first annular member is provided with an annular boss, the annular boss is opposite to the second annular member, and the first connecting member is connected with the annular boss and the second annular member, to clamp the armoring steel wire between the annular boss and the second annular member; the third connecting member is sleeved on an outside of the first annular member, and the third connecting member is configured to fix the armoring steel wire which passes around the annular boss.

The end part of the armoring steel wire extends beyond the annular boss and passes around the annular boss, being located on the outside of the first annular member, and the first connecting member connects the annular boss and the second annular member to fix the armoring steel wire. The end part of the armoring steel wire, after passing around the annular boss, is laid on the outside of the first annular member, and the third connecting member is sleeved on the outside of the first annular member to fix the end part of the armoring steel wire between the third connecting member and the first annular member, thereby enhancing the clamping capacity on the armoring steel wire through radial clamping, and thus improving the overall tensile resistance capacity.

In another aspect, the present application further provides an underwater joint box, which includes the foregoing fixing clamp for an armoring steel wire of a submarine cable.

According to the foregoing technical solutions, the fixing clamp for an armoring steel wire of a submarine cable and the underwater joint box provided by the present application may clamp an armoring steel wire between the first fixing member and the second fixing member by providing the first fixing member, the second fixing member and the first connecting member. This may ensure that the tensile resistance performance of the armoring steel wire is not affected, thereby meeting the usage requirements of the armoring steel wire in the underwater working environment.

### BRIEF DESCRIPTION OF DRAWINGS

To describe the technical solutions of the present application or in the prior art more clearly, the following briefly introduces the accompanying drawings needed for describing the embodiments or the prior art. Apparently, the accompanying drawings in the following description are merely some embodiments of the present application, and for persons of ordinary skill in the art, they may still derive other drawings from these accompanying drawings without creative effort.
FIG. 1 is a first schematic structural diagram of a fixing clamp for an armoring steel wire of a submarine cable provided by the present application.
FIG. 2 is a second schematic structural diagram of a fixing clamp for an armoring steel wire of a submarine cable provided by the present application.
FIG. 3 is a third schematic structural diagram of a fixing clamp for an armoring steel wire of a submarine cable provided by the present application.

### Reference signs:

1: first fixing member; 2: second fixing member; 3: first connecting member; 4: third connecting member;
11: first fixing part; 12: second fixing part; 13: annular boss; 21: third fixing part; 22: fourth fixing part;
100: armoring steel wire; 111: first inclined surface; 121: through hole; 211: second inclined surface.

### DESCRIPTION OF EMBODIMENTS

To make the objectives, technical solutions, and advantages of the present application clearer, the following clearly and comprehensively describes the technical solutions of the present application with reference to the accompanying drawings of the present application. Apparently, the described embodiments are merely some rather than all embodiments of the present application. All other embodiments obtained by persons of ordinary skill in the art based on the embodiments of the present application without creative effort shall fall within the protection scope of the present application.

In the description and claims of the present application, the features defined by the terms "first" and "second" may explicitly or implicitly include one or a plurality of such features. In the description of the present application, unless otherwise specified, the meaning of "a plurality of" is two or more.

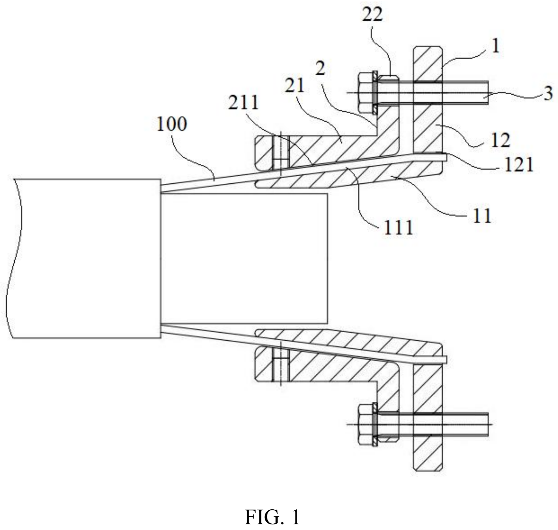

The following describes a fixing clamp for an armoring steel wire of a submarine cable and an underwater joint box of the present application with reference to FIGS. 1-3.

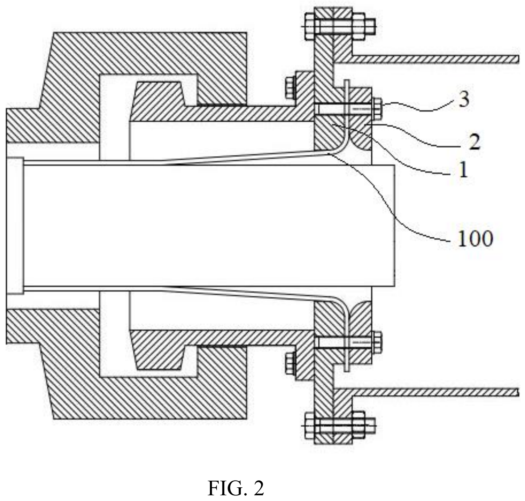

As shown in FIGS. 1 and 2, in embodiments of the present application, a fixing clamp for an armoring steel wire of a submarine cable includes: a first fixing member 1, a second fixing member 2 and a first connecting member 3; the first fixing member 1 and the second fixing member 2 are configured to clamp an armoring steel wire 100 therebetween; the first connecting member 3 is configured to fix the first fixing member 1 and the second fixing member 2, thereby clamping the armoring steel wire 100 tightly.

Specifically, to ensure that the maximum tension borne by the underwater joint box can meet the requirements of the actual underwater working environment, a firm and reliable fixing clamp is needed to fix the armoring steel wire 100, so as to meet the tensile resistance performance requirements of the underwater joint box. In an embodiment of the present application, both the first fixing member 1 and the second fixing member 2 are annular members, and the first fixing member 1 and the second fixing member 2 may be in various forms. For example: the second fixing member 2 may be sleeved on an outside of the first fixing member 1, and the armoring steel wire 100 is fixed between the first fixing member 1 and the second fixing member 2 by utilizing the two circumferential surfaces; optionally, the first fixing member 1 and the second fixing member 2 may also be arranged opposite to each other, and the armoring steel wire 100 is fixed between the first fixing member 1 and the second fixing member 2 by utilizing their end surfaces.

Further, in the present embodiment, the first connecting member 3 may be a bolt, so that the clamping force on the armoring steel wire 100 may be adjusted by adjusting a tightening degree of the bolt, so as to ensure that the tensile resistance performance of the armoring steel wire 100 is not affected.

It should be noted that: the fixing clamp provided in the present embodiment of the present application is configured to fix most of armoring steel wires of an armor layer of the submarine cable.

The fixing clamp for an armoring steel wire of a submarine cable provided in the embodiments of the present application, by providing the first fixing member, the second fixing member and the first connecting member, may clamp an armoring steel wire between the first fixing member and the second fixing member, ensuring that the tensile resistance performance of the armoring steel wire is not affected, thereby meeting the usage requirements of the armoring steel wire in the underwater working environment.

Further, the embodiments of the present application provide various fixing clamps of the armoring steel wire 100 in order to meet different forms of armoring steel wire structures.

Optionally, in one embodiment of the present application, the second fixing member 2 is sleeved on an outside of the first fixing member 1, the armoring steel wire 100 is located between circumferential surfaces of the first fixing member 1 and the second fixing member 2, the first connecting member 3 includes an annular member with an opening and a bolt, the annular member is sleeved on an outside of the second fixing member 2, and the openings of the annular members are connected by the bolt, so as to fix the armoring steel wire 100 between the first fixing member 1 and the second fixing member 2.

Optionally, in a second embodiment of the present application, the second fixing member 2 is sleeved on an outside of the first fixing member 1, and the first connecting member 3 penetrates through the first fixing member 1 and the second fixing member 2 to fix the armoring steel wire 100 between the first fixing member 1 and the second fixing member 2.

Specifically, as shown in FIG. 1, in the present embodiment, the first fixing member 1 includes a first fixing part 11 and a second fixing part 12, the second fixing part 12 is arranged perpendicular to and connected to the first fixing part 11; the second fixing member 2 includes a third fixing part 21 and a fourth fixing part 22, the fourth fixing part 22 is arranged perpendicular to and connected to the third fixing part 21. The third fixing part 21 is sleeved on an outside of the first fixing part 11, the fourth fixing part 22 is arranged parallel to the second fixing part 12, and the first connecting member 3 is connected with the second fixing part 12 and the fourth fixing part 22. A surface of the first fixing part 11 fitting with the armoring steel wire 100 is provided with a first inclined surface 111, a surface of the third fixing part 21 fitting with the armoring steel wire 100 is provided with a second inclined surface 211, and a slope of the first inclined surface 111 matches a slope of the second inclined surface 211, to clamp the armoring steel wire 100 between the first inclined surface 111 and the second inclined surface 211.

Specifically, for an armoring steel wire structure where the armoring steel wire 100 forms an angle with a center of a submarine cable, the first fixing part 11 of a fixing clamp is provided with the first inclined surface 111, the third fixing part 21 is provided with the second inclined surface 211, the armoring steel wire 100 is located between the first inclined surface 111 and the second inclined surface 211, and the first connecting member 3 is configured to connect the second fixing part 12 with the fourth fixing part 22. When the first connecting member 3 is tightened, the third fixing part 21 may be driven to slide along the first fixing part 11, thereby enhancing the clamping force of the fixing clamp on the armoring steel wire 100.

Further, in the present embodiment, the first connecting member 3 provides a working pressure to enable the first fixing part 11 and the third fixing part 21 to compress the armoring steel wire 100, thereby generating a friction force, and the friction force is used to counteract a pulling force in the submarine cable, thereby realizing the fixing of the submarine cable.

Further, in the present embodiment, the second fixing part 12 is provided with a through hole 121. After an end part of the armoring steel wire 100 passes through the through hole 121, a locking degree of the first connecting member 3 is adjusted, to enable the third fixing part 21 to slide along the first fixing part 11 so as to lock the armoring steel wire 100 tightly.

Optionally, in another embodiment of the present application, the first fixing member 1 still includes a first fixing part 11 and a second fixing part 12, both of which are arranged perpendicular to and connected to each other, and the second fixing member 2 also includes a third fixing part 21 and a fourth fixing part 22, both of which are arranged perpendicular to and connected to each other, but the first fixing part 11 and the third fixing part 21 are not provided with inclined surfaces. The armoring steel wire 100 is located between the first fixing part 11 and the third fixing part 21, an end part of the armoring steel wire 100 is located between the second fixing part 12 and the fourth fixing part 22, and the first connecting member 3 is configured to connect the second fixing part 12 with the fourth fixing part 22 to clamp the end part of the armoring steel wire 100 tightly. The second connecting member is sleeved on an outside of the third fixing part 21 to clamp the third fixing part 21 and the first fixing part 11 tightly, thereby clamping the armoring steel wire 100 located between the first fixing part 11 and the third fixing part 21 tightly.

As shown in FIG. 2, optionally, in another embodiment of the present application, the first fixing member 1 is arranged opposite to the second fixing member 2, the armoring steel wire 100 is located between the first fixing member 1 and the second fixing member 2, and the first connecting member 3 penetrates through the first fixing member 1 and the second fixing member 2 to fix the armoring steel wire 100 between the first fixing member 1 and the second fixing member 2.

Specifically, for an armor layer structure where the armoring steel wire 100 is parallel to a center of the submarine cable, the first fixing member 1 is a first annular member, the second fixing member 2 is a second annular member, and the first annular member is opposite to the second annular member to clamp the armoring steel wire 100 therebetween.

In the present embodiment, the end part of the armoring steel wire 100 is located between the first fixing member 1 and the second fixing member 2, and the first connecting member 3 is configured to connect the first fixing member 1 with the second fixing member 2 to clamp the armoring steel wire 100 tightly.

Specifically, the first connecting member 3 provides a working pressure to enable the first fixing member 1 and the second fixing member 2 to compress the armoring steel wire 100, generating a friction force, and the friction force is used to counteract a pulling force in the submarine cable, thereby realizing the fixing of the submarine cable.

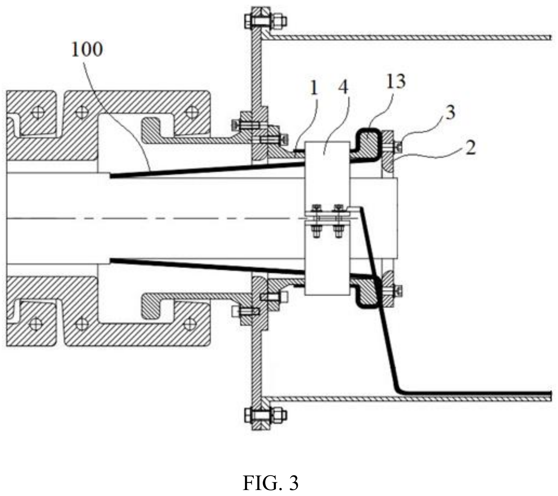

Further, as shown in FIG. 3, in the foregoing embodiments, the fixing clamp further includes a third connecting member 4, the first annular member is provided with an annular boss 13, the annular boss 13 is opposite to the second annular member, and the first connecting member 3 is connected with the annular boss 13 and the second annular member to clamp the armoring steel wire 100 between the annular boss 13 and the second annular member. The third connecting member 4 is sleeved on an outside of the first annular member, and the third connecting member 4 is configured to fix the armoring steel wire 100 which passes around the annular boss 13.

Specifically, in the present embodiment, the end part of the armoring steel wire 100 extends beyond the annular boss 13 and passes around the annular boss 13, being located on the outside of the first annular member, and the first connecting member 3 connects the annular boss 13 with the second annular member to fix the armoring steel wire 100. The end part of the armoring steel wire 100, after passing around the annular boss 13, is laid on the outside of the first annular member, and the third connecting member 4 is sleeved on the outside of the first annular member to fix the end of the armoring steel wire 100 between the third connecting member 4 and the first annular member, thereby enhancing the clamping capacity on the armoring steel wire 100 through radial clamping, and thus improving the overall tensile resistance capacity thereof.

Further, in the foregoing embodiments, connecting members may also be provided in the axial and radial directions to further improve the clamping capacity of the fixing clamp.

The fixing clamp for an armoring steel wire of a submarine cable provided in the embodiments of the present application, by developing fixing clamps of different forms, may select different armor fixing forms according to the performance, material and shape of the armoring steel wire itself, thereby meeting the operation requirements of the underwater joint box, expanding the technical scope of the restoration technology of the armoring steel wire of the submarine cable. For different voltage levels and corresponding submarine cable armoring structures, it is possible to select appropriate fixing clamps, and then form standardized structural forms and fixed installation construction processes, facilitating offshore on-site splicing and long-distance laying.

An embodiment of the present application also provides an underwater joint box, which includes a fixing clamp for an armoring steel wire of a submarine cable.

Specifically, the fixing clamp for an armoring steel wire of a submarine cable includes: a first fixing member 1, a second fixing member 2 and a first connecting member 3; the first fixing member 1 and the second fixing member 2 are configured to clamp the armoring steel wire 100 therebetween; the first connecting member 3 is configured to fix the first fixing member 1 and the second fixing member 2, thereby clamping the armoring steel wire 100 tightly.

To ensure that the maximum tension borne by the underwater joint box can meet the requirements of the actual underwater working environment, a firm and reliable fixing clamp is needed to fix the armoring steel wire 100, so as to meet the tensile resistance performance requirements of the underwater joint box. In the embodiments of the present application, both the first fixing member 1 and the second fixing member 2 are annular members, and the first fixing member 1 and the second fixing member 2 may be in various forms. For example: the second fixing member 2 may be sleeved on the outside of the first fixing member 1, and the armoring steel wire 100 is fixed between the first fixing member 1 and the second fixing member 2 by utilizing the two circumferential surfaces; optionally, the first fixing member 1 and the second fixing member 2 may also be arranged opposite to each other, and the armoring steel wire 100 is fixed between the first fixing member 1 and the second fixing member 2 by utilizing their end surfaces.

Further, in the present embodiment, the first connecting member 3 may be a bolt, and the clamping force on the armoring steel wire 100 may be adjusted by adjusting the tightening degree of the bolt, so as to ensure that the tensile resistance performance of the armoring steel wire 100 is not affected.

It should be noted that: the fixing clamp provided in the present embodiment of the present application is configured to fix most of the armoring steel wires of an armor layer of the submarine cable.

The underwater joint box provided in the embodiments of the present application, by providing the fixing clamp for an armoring steel wire of a submarine cable, ensures that the tensile resistance performance of the armoring steel wire is not affected, thereby meeting the usage requirements of the armoring steel wire in the underwater working environment.

Finally, it should be noted that the foregoing embodiments are merely intended for describing the technical solutions of the present application other than limiting the present application. Although the present application is described in detail with reference to the foregoing embodiments, persons of ordinary skill in the art should understand that they may still make modifications to the technical solutions described in the foregoing embodiments or make equivalent substitutions to some technical features therein, and these modifications or substitutions do not make the essence of the corresponding technical solutions depart from the spirit and scope of the technical solutions of the embodiments of the present application.

## Claims

1. A fixing clamp for an armoring steel wire of a submarine cable, comprising: a first fixing member, a second fixing member and a first connecting member, wherein the first fixing member and the second fixing member are configured to clamp an armoring steel wire therebetween; the first connecting member is configured to fix the first fixing member and the second fixing member, to clamp the armoring steel wire.

2. The fixing clamp for an armoring steel wire of a submarine cable according to claim 1, wherein the second fixing member is sleeved on an outside of the first fixing member, and the first connecting member is sleeved on an outside of the second fixing member.

3. The fixing clamp for an armoring steel wire of a submarine cable according to claim 1, wherein the second fixing member is sleeved on an outside of the first fixing member, and the first connecting member is connected with the first fixing member and the second fixing member.

4. The fixing clamp for an armoring steel wire of a submarine cable according to claim 1, wherein the first fixing member is arranged opposite to the second fixing member, and the first connecting member is connected with the first fixing member and the second fixing member.

5. The fixing clamp for an armoring steel wire of a submarine cable according to claim 3, wherein the first fixing member comprises a first fixing part and a second fixing part, and the second fixing part is arranged perpendicular to and connected to the first fixing part;
the second fixing member comprises a third fixing part and a fourth fixing part, and the fourth fixing part is arranged perpendicular to and connected to the third fixing part;
the third fixing part is sleeved on an outside of the first fixing part, the fourth fixing part is arranged parallel to the second fixing part, and the first connecting member is connected with the second fixing part and the fourth fixing part;
a surface of the first fixing part fitting with the armoring steel wire is provided with a first inclined surface, a surface of the third fixing part fitting with the armoring steel wire is provided with a second inclined surface, and a slope of the first inclined surface matches a slope of the second inclined surface, to clamp the armoring steel wire between the first inclined surface and the second inclined surface.

6. The fixing clamp for an armoring steel wire of a submarine cable according to claim 5, wherein the second fixing part is provided with a through hole, and the armoring steel wire passes through the through hole.

7. The fixing clamp for an armoring steel wire of a submarine cable according to claim 3, further comprising a second connecting member, wherein
the first fixing member comprises a first fixing part and a second fixing part, and the second fixing part is arranged perpendicular to and connected to the first fixing part;
the second fixing member comprises a third fixing part and a fourth fixing part, and the fourth fixing part is arranged perpendicular to and connected to the third fixing part;
the third fixing part is sleeved on an outside of the first fixing part, the fourth fixing part is arranged parallel to the second fixing part, and the armoring steel wire is clamped between the first fixing part and the third fixing part, and between the second fixing part and the fourth fixing part;
the first connecting member is connected with the second fixing part and the fourth fixing part, and the second connecting member is sleeved on an outside of the third fixing part.

8. The fixing clamp for an armoring steel wire of a submarine cable according to claim 4, wherein the first fixing member is a first annular member, the second fixing member is a second annular member, and the first annular member is opposite to the second annular member to clamp the armoring steel wire therebetween.

9. The fixing clamp for an armoring steel wire of a submarine cable according to claim 8, further comprising a third connecting member; wherein the first annular member is provided with an annular boss, the annular boss is opposite to the second annular member, and the first connecting member is connected with the annular boss and the second annular member, to clamp the armoring steel wire between the annular boss and the second annular member;
the third connecting member is sleeved on an outside of the first annular member, and the third connecting member is configured to fix the armoring steel wire which passes around the annular boss.

10. An underwater joint box, comprising the fixing clamp for an armoring steel wire of a submarine cable according to any one of claims 1-9.
